# EUROPEAN PATENT APPLICATION

(11) **EP 1 854 360 A1**
(43) Date of publication of application: **14.11.2007**
(21) Application number: 07107686.3
(22) Date of filing: 08.05.2007
(51) Int. Cl.: A23B 7/16, A23B 7/022, A23B 7/02, A23L 1/00

(54) **Method and apparatus for applying a coating to fruit and/or vegetables**

(30) Priority: 09.05.2006 NL 1031774
(71) Applicant: De Leye Agrotrade B.V., 5076 AS Haaren (NL)
(72) Inventor: Hoefnagels, Johannes Adrianus Maria, 5076 AS, Haaren (NL)
(74) Representative: van Loon, C.J.J.

(57) **Abstract**

The invention relates to a method for applying a life-increasing, and preferably display life-prolonging coating to pieces of vegetables and/or fruit, in particular pomes, such as apples and/or pears. The present invention further relates to apparatuses and devices to be used in this method.
The outer surface of the pieces of vegetables and/or fruit is moistened with a solution, with the coating components therein, and the pieces are dried to such an extent that they do not become sticky and at such a temperature that the surface is not damaged by heating.

## Description

The invention relates to an industrial, preferably continuous method for applying a coating to fruit and/or vegetables, to an apparatus or processing apparatus for carrying out such a method and, in addition, to a drying apparatus for drying an outer surface of pieces of vegetables and/or fruit.

More specifically, the invention is directed to coating harvested fruit and/or vegetables with a view to prolonging the life, and in particular the display life of the treated vegetable product and/or enhancing the appearance thereof. Display life is understood to mean the period during which the fruit or the vegetable is displayed for trade and, to that end, looks sufficiently attractive and preferably so as to increase consumer interest. This coating may be used on both a freshly harvested vegetable product and to such products which have been stored in cold stores or stores with a controlled atmosphere and in particular a ULO (ultra-low oxygen) controlled atmosphere (CA) for some time (for instance up to a few months even up to a year or longer).

In its most preferred embodiment, the invention relates to coating fruit and in particular apples and pears.

Suitable coatings for this purpose are known per se. They function by adjusting the lenticels, i.e. respiratory cells, in the peel or outer surface of the fruit or the vegetable such that the internal gas environment in the fruit or the vegetable delays ripening processes.

Simply presented, suitable coatings are products which block the ingress or inflow of oxygen into the fruit or the vegetable, while the outflow of carbon dioxide is maintained. Blocking the inflow of oxygen does not only serve to delay the ripening processes but also brings about that aerobic organisms cause no, at least less risk of decay and prevents adverse oxidation processes; the outflow of carbon dioxide serves to prevent anaerobic fermentation.

For many, if not all, applications, the coating is to have no adverse effect on the taste, smell and color of the vegetable product to be consumed. In addition, the coating preferably remains on the vegetable product when it passes a water bath or is otherwise washed with water.

In fact, for foods, suitable oxygen-inhibiting formulations can be used, in particular formulations based on sugar esters.

An example of such life-increasing, and preferably display life-prolonging coatings comprises compositions of sucrose esters of fatty acids (EC number D473), carboxymethylcellulose (EC number E466) and optionally vegetable oils and/or mono/diglycerides of fatty acids (EC number E471). Fructose esters may also be suitably used in such compositions. Depending on the type of vegetable or fruit and in particular any surface layer present thereon, such as for instance a wax layer, the lipophilicity of the composition can be adjusted. A commercially available and preferred coating is sold under the trade name of Bio-Fresh^{™} (ex de Leye Agrotrade B.V. of Haaren, the Netherlands). BioFresh^{™} blocks about 85-95% of the ingress of oxygen, but keeps about 85-95% of the outflow of carbon dioxide intact. Optionally, the product Semperfresh^{™} may also be used.

Such life-increasing and preferably display life-prolonging and/or appearance-enhancing coatings are typically applied to the fruit or the vegetable by, piece by piece, immersing in, spraying with or covering with a solvent, for instance and preferably water, in which the coating material is dissolved, at least suspended, after which the product is dried.

The inventor has attempted to use this known method on an industrial scale, and preferably continuously, and to integrate it with a conventional sorting line, where the pieces of vegetables and/or fruit are fed out on the basis of size and quality.

Such a sorting line typically consists of a water bath, in which the fruit or the vegetable is washed, followed by a pre-drying belt, typically a sponge belt, on which the clinging water is removed from the fruit or the vegetable, and a singulator for the dry fruit or the dry vegetable, comprising a sorting apparatus, where the singled fruit or the singled vegetable is selected by quality and/or by size and is packaged in boxes, crates or other containers.

It occurred to the inventor to include the treatment with coating composition in such a sorting line and in particular the start thereof, so that the outer surface of the fruit or the vegetable is completely covered with the coating material, after which the usual installation would ensure the drying of the coating.

Incidentally, the dump or water bath is not, at least less, suitable for this. This bath becomes very dirty, while then many cubic meters of coating solvents are needed.

A separate bath, spray or shower installation directly following the dump bath was not satisfactory either.

This is because it was found that, on the pre-drying belt, such as a sponge belt, not only the clinging water, but also the coating layer came off. Probably, contacts with the pre-drying belt, for instance coming into contact with the rotating sponges, results in the not yet dry coating also sticking to the pre-drying belt and either being washed away with the water or remaining on the fruit or vegetable outer surface as a not completely sealing coating.

The inventor has further tried to force-dry the fruit or the vegetable after leaving the water bath by guiding air over the product by means of strong fans. However, it was found that, with the clinging water, the coating layer was also blown away.

In American patent publication 4,291,472, a method and apparatus are described for drying products such as citrus fruits and apples, on which an aqueous coating of wax has been applied. Drying takes place until the fruit is not sticky anymore. The coating used protects the fruit during storage and transport and enhances the appearance of the fruit in sale. This American patent publication contemplates lowering the temperature of the drying air, which is typically 160°F/71°C in the prior art, in order to efficiently use energy. To this end, a number of drying sections coupled one behind the other are placed over a conveyor belt and dried vertically. Thus, the fruit is dried with a uniform air temperature (of 37-54°C).

The Spanish patent application 2 129 362 describes a self-regulating drying apparatus for fruit. Although a number of references are made to a uniform wax layer, no step is mentioned in which a wax coating is applied to the fruit, which means that the wax layer is a natural wax layer. Further, the drying air is generally used in countercurrent flow.

FR-A-2351609 does describe a treatment with wax. The invention of this French application resides in the application of airflows which dry fruit lying on a conveyor belt from below, while the flow direction of the drying air goes in all directions.

Spanish patent publication 8307459 shows that the fruit is dried in countercurrent flow (see in particular Fig. 1).

In American patent publication 3,488,200, a method is described for coating cooled fruit, with the cooled fruit first being treated with hot water (100-160°F/37-54°C) before being treated with wax, and then being force-dried with environmental air. The treatment with the hot water is such that the core of the fruit remains cold.

American patent publication 2,285,841 relates to a method where coating material is sprayed over fruit in finely distributed solution, after which the solvent evaporates in the coating material. For this treatment, the fruit has been washed and dried, but these steps are not elaborated on in much detail. Claim 1 of this document describes a treatment where air is displaced in vertical direction.

American patent publication 1,692,289 describes coating fruit with a rather robust coating. In the apparatus used therein, air is blown over the coating to distribute it properly. This does not involve any directed airflow.

French patent application 2 563 328 describes a drying tunnel with partly countercurrent flow and partly in concurrent flow.

In FR-A-2 520 489, a system is shown where belts running one above the other are subjected to a drying step.

US-A-5,832,627 uses vertical drying, at least drying where no specific airflow direction is kept.

French patent application 2 480 922 is again of the type where partly countercurrent flow and partly concurrent flow is used.

It is an object of the invention to provide an industrially applicable, preferably continuous method for applying a coating to fruit and/or vegetables, which can be integrated with a conventional sorting line, where the pieces of vegetables and/or fruit are fed out on the basis of size and/or quality, such as hardness, sugar content, color, etc., while the above-mentioned drawbacks, such as the fact that, with use of the sponges for drying the outer surface, at least large parts of the coating material are removed from the outer surface together with the solvent, do not occur.

It has now been found that, by applying the solution with coating components to the pre-dried pieces of fruit or vegetable, and in particular pears and apples, and then drying such that the treated pieces of vegetable and/or fruit do not reach the sorting line while sticky, above-mentioned problem can be solved.

In a first aspect, the invention therefore relates to a method for applying a life-increasing, and preferably display life-prolonging, and/or appearance-enhancing coating to pieces of vegetables and/or fruit, in particular pomes, such as apples and/or pears, where
(a) the outer surface of the pieces of vegetables and/or fruit is moistened with a solution, with coating components therein, and
(b) the pieces of vegetables and/or fruit are dried to such an extent that they do not reach a sorting line or end up in crates or other packaging material while sticky, while drying takes place at such a temperature that the surface of the pieces of vegetables and/or fruit is not damaged by heating. The drying may take place with the aid of air or, for instance, thermal radiation. Drying with air may take place coldly, for instance at environmental temperature, although the air is then sufficiently dry or the drying time and then often also the conveyor is sufficiently long. Drying with hot air and/or force-drying with air may also take place.

In a preferred embodiment, the pieces of vegetable and/or fruit are, in step (b), conveyed through at least a part of a hot airflow for drying the outer surface, while the pieces of vegetables and/or fruit are conveyed through the part of the airflow in a conveying direction, while the conveying direction is at least substantially directed the same as a flow direction of the airflow. The hot airflow flows substantially in one direction directed the same as the conveying direction.

The moistening with coating may, for instance, take place with immersion, spraying, showering or drenching.

Because the conveying direction and the flow direction of the hot airflow are at least substantially directed the same, the method can be used such that the most moistened pieces of vegetables and/or fruit come into contact with the hot airflow upstream and that the pieces of vegetables and/or fruit already dried somewhat come into contact with the already somewhat cooler hot airflow downstream. As the outer surface of the pieces of vegetables and/or fruit becomes drier, the air with which the outer surface comes into contact is less hot and too hot air is prevented from coming into contact with already dried pieces of vegetables and/or fruit. Then the hot air has no adverse effect on the quality of the pieces of vegetables and/or fruit.

If a somewhat dry piece of fruit or vegetable should come into contact with hot air, then the quality of that vegetable product, in particular after storing it for some time, declines rapidly; the treatment of (dry) vegetable and (dry) fruit with hot air adversely affects - as is known - the quality of the pieces of vegetables and/or fruit.

By contacting the hot air with the still wet vegetable products in concurrent flow, the wet layer forms a thermally insulating protective layer on the vegetable product. It goes without saying that the length of this path on which the vegetable products come into contact with the hot air and/or the speed of the vegetable products on that path is set depending on the drying process.

In a preferred embodiment, the pieces of vegetables and/or fruit are coated with a composition based on sugar esters of fatty acids and preferably the sucrose esters and fructose esters of fatty acids. Suitable compositions have already been described hereinabove.

In a second aspect, the invention relates to a drying apparatus for drying an outer surface of pieces of vegetables and/or fruit, in particular pomes, such as apples and/or pears, while the drying apparatus is provided with a blower or blowing device for providing an airflow, a conveyor for conveying the pieces of vegetables and/or fruit through at least a part of an airflow in a conveying direction, while the flow direction of the airflow is substantially in one direction and is at least substantially directed the same as the conveying direction.

In a third aspect, the invention relates to a processing apparatus, while the processing apparatus comprises a first moisturizer, for instance a sprayer, for applying a solution to an outer surface of the pieces of vegetables and/or fruit, with the coating components needed for the method therein, while the processing apparatus is provided with a drying apparatus provided with a blower for providing an airflow, a conveyor for conveying the pieces of vegetables and/or fruit through at least a part of an airflow in a conveying direction, while the conveying direction is at least substantially directed the same as the flow direction of the airflow. Such a processing apparatus is particularly suitable for carrying out above-mentioned method forming the first aspect of the invention.

The air may be heated by a blower comprising a heating element but may also be heated by means of a heating element placed in front of or behind the blower.

In a preferred embodiment, the hot airflow can be generated with the aid of a blower and air coming from the airflow is, at least partly, guided back to the blower. In this manner, heat can be used energy-efficiently. However, steps should then be taken not to let the moisture content in the recirculated air increase too much, since this may adversely affect the drying process.

In use of the method for applying the coating to the vegetables and fruit, and in particular to apples and pears, it has been found favorable that the hot airflow has a temperature of at least 60°C, which temperature is preferably between 70°C and 80°C. To this end, an embodiment of the processing apparatus according to the invention is possible, where the heating element is arranged for heating air to a temperature which is between 70°C and 80°C.

In order to be able to direct the airflow efficiently, it is preferred that the drying apparatus is provided with an (insulation) cap for guiding the airflow. Preferably, the conveyor is arranged for feeding the pieces of vegetables and/or fruit under this cap.

In order to integrate the method according to the invention in a processing line of the pieces of vegetables and/or fruit, it is preferred that the processing apparatus is part of a sorting apparatus for sorting pieces of vegetables and/or fruit, in particular pomes, such as apples and/or pears, which sorting apparatus is provided with a detector for determining a quantity, such as the size, the sugar content, the color and/or the hardness of the separate pieces of vegetables and/or fruit and a separating portion for separating the pieces of vegetables and/or fruit on the basis of the quantity of the pieces of vegetables and/or fruit.

Incidentally, it is also possible for the vegetable product moistened with coating material, for which, for instance, an immersion bath, a spraying, showering and/or drenching device is used, to be dried at a low temperature (<10°C, more preferably <5°C, for instance 1-2°C) for a period, for instance 1-2 days, and only then be sorted.

These and other aspects of the invention will be explained in more detail with reference to the drawing, in which:
Fig. 1 shows a perspective view of a sorting apparatus with an embodiment of the processing apparatus according to the invention;
Fig. 2 shows a schematic side elevational view of the sorting apparatus of Fig. 1; and
Fig. 3 shows a schematic side elevational view of a sorting apparatus provided with a processing apparatus of Fig. 1.

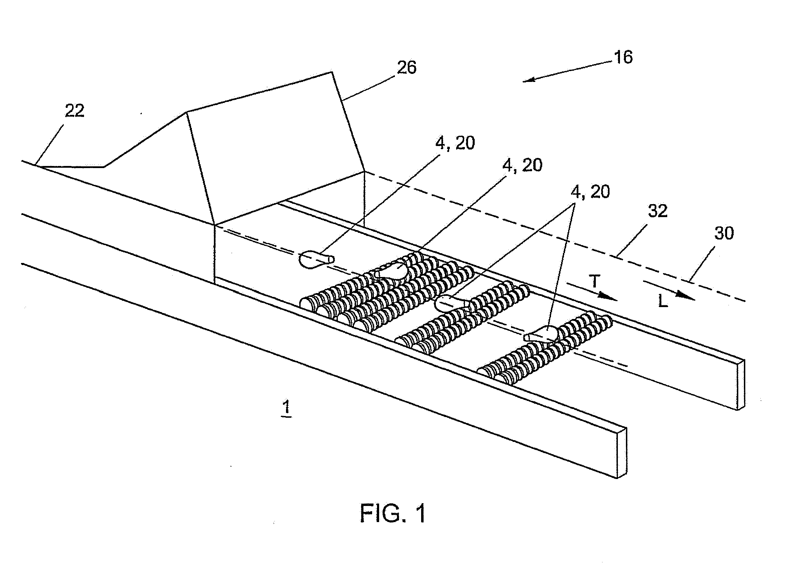

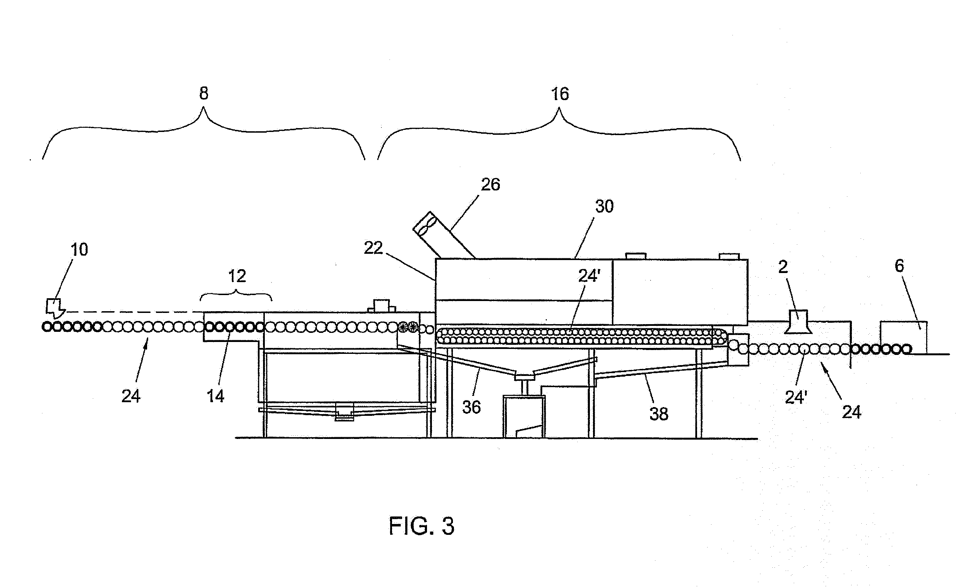

In Figs. 1, 2, 3, a sorting apparatus 1 is shown provided with a detector 2, such as a photocell 2, for determining a relevant quantity of pieces of vegetables and/or fruit 4 present in the sorting apparatus 1. Further, the sorting apparatus 1 is provided with a separating portion 6 for separating the pieces of vegetables and/or fruit 4 on the basis of the quantity of the pieces of vegetables and/or fruit 4. Further, the sorting apparatus 1 is provided with a reconditioning device 8 for reconditioning the pieces of vegetables and/or fruit 4, i.e. again adjusting to environmental conditions which, in this example, have been preserved for a long time in, for instance, a warehouse with a ULO-CA atmosphere. In this embodiment, the reconditioning device 8 comprises, for instance, a second moisturizer 10 (such as a wash basin or water dumper) for moistening the pieces of vegetables and/or fruit 4 with a reconditioning fluid, which substantially consists of water, and a roller conveyor 12 with sponges 14 for drying the pieces of vegetables and/or fruit moistened with the reconditioning fluid.

Further, the sorting apparatus 1 comprises a processing apparatus 16 for applying a coating to the pieces of vegetables and/or fruit 4. The processing apparatus 16 comprises a pouring or spraying device 18 for applying a fluid, for instance an aqueous solution of Bio-Fresh^{™}, to an outer surface 20 of the pieces of vegetables and/or fruit 4.

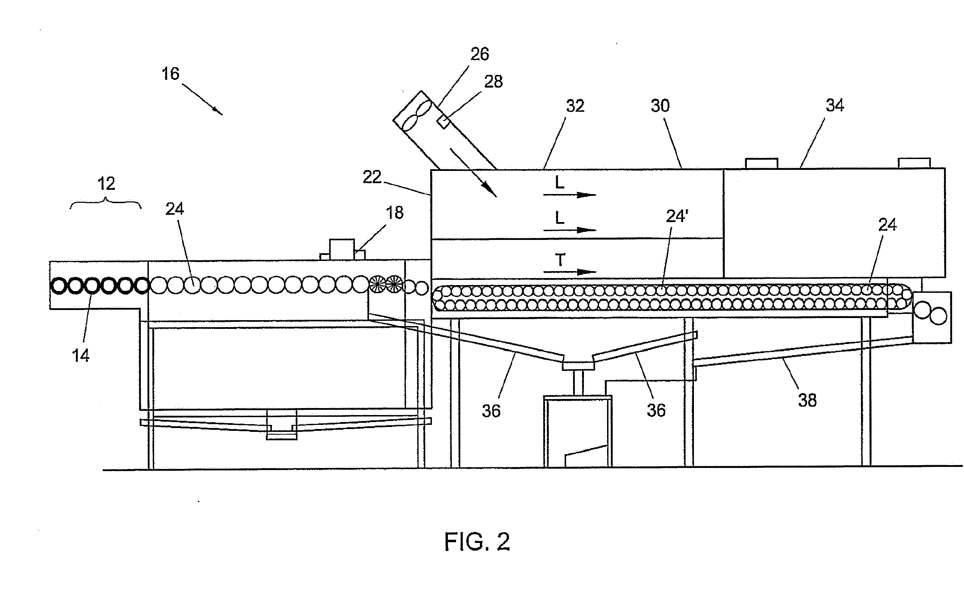

The processing apparatus 16 further comprises a drying apparatus 22 with a conveyor 24 with a disc track 24' for conveying the pieces of vegetables and/or fruit 4 in a conveying direction T. In Fig. 1, the disc track 24' is only partly shown. The drying apparatus 22 also comprises a blower 26 for providing a hot airflow L. In this embodiment, the hot airflow L and the conveying direction T are directed the same, as can particularly be seen in Fig. 2. In order to provide the air of the airflow with a temperature which is preferably above 60°C, for instance between 70°C and 80°C, the blower is further provided with a heating element 28, for instance a heating coil 28. The drying apparatus 22 further comprises a cap 30 for guiding the airflow L. In this embodiment, this insulating cap 30 comprises a fixed first part 32 and a detachable second part 34. Further, in this embodiment, the drying apparatus 22 is provided with a first drip plate 36 and a second drip plate 38 operatively located below the conveyor 24, for discharging fluid dripped off or blown off the outer surface 20 of the pieces of vegetables and/or fruit.

The fluid collected via the drip plates 36, 38 can be reused as a coating composition and be fed back to the pouring or spraying device 18. Then it should be checked at regular intervals whether the solution does not contain too many microorganisms.

In practice, after having been preserved in cooling and/or controlled atmosphere, via the moisturizer 10 in which or with which the pieces of vegetables and/or fruit 4 are moistened and washed with a reconditioning fluid, for instance a water dumper 10, pieces of vegetables and/or fruit 4, in particular apples and pears, are placed on the conveyor 24 and conveyed. The object of this moisturizing is to trigger the respiration of the tissue of the pieces of vegetables and/or fruit 4 again and to revitalize the pieces of vegetables and/or fruit 4 in this manner. Because it is undesired that the pieces of vegetables and/or fruit 4 are processed further in a wet condition, the pieces of vegetables and/or fruit 4 are dried with the aid of a roller conveyor 12 with sponges 14.

After this, by the conveyor 24, the pieces of vegetables and/or fruit 4 are guided further along the pouring or spraying device 18 where the outer surface of the pieces of vegetables and/or fruit is again moistened with a fluid. After that, the pieces of vegetables and/or fruit 4 are fed to the drying apparatus 22, where the pieces of vegetables and/or fruit 4 are conveyed through at least a part of the airflow L for drying the outer surface 20. Here, the conveying direction T, as is clearly shown in Figs. 1 and 2, is substantially directed the same as the flow direction of the airflow.

The airflow L is generated with the aid of a blower 26 and, in this example, thanks to the heating element 28, the airflow has a temperature of about 80°C upon leaving the blower 26. When the airflow comes into contact with the pieces of vegetables and/or fruit, the airflow has a temperature which is between 70°C and 80°C.

Upon leaving the drying apparatus 16, the pieces of vegetables and/or fruit have at least virtually been dried and have been provided with a coating which has remained after the evaporation of the fluid.

Then, the pieces of vegetables and/or fruit 4 are conveyed along the photocell 2, with the aid of which photocell, the size of the separate pieces of vegetables and/or fruit is determined. In the separating portion 6, the pieces of vegetables and/or fruit are separated from one another.

The invention is not limited to the above-described embodiment. Thus, the second moisturizer may be arranged as a sprayer, but also as a bath, without deviating from the invention. It is further possible that air coming from the airflow is guided back to the blower with the aid of a flow circuit.

## Claims

1. A method for applying a life-increasing, and preferably display life-prolonging coating to pieces of vegetables and/or fruit, in particular pomes, such as apples and/or pears, wherein
(a) the outer surface of the pieces of vegetables and/or fruit is moistened with a solution, with the coating components therein, and
(b) the pieces of vegetables and/or fruit are dried to such an extent that they do not become sticky and at such a temperature that the surface of the pieces of vegetables and/or fruit is not damaged by heating.

2. A method according to claim 1, wherein the pieces of vegetables and/or fruit are conveyed through at least a part of a hot airflow for drying the outer surface, wherein the pieces of vegetables and/or fruit are conveyed through the part of the airflow in a conveying direction, wherein the conveying direction is at least substantially directed the same as a flow direction of the airflow.

3. A method according to claim 1 or 2, wherein the hot airflow has a temperature of at least 60°C, and preferably has a temperature which is between 70°C and 80°C.

4. A method according to any one of the preceding claims, wherein, as a coating, a composition is used which is based on sucrose esters of fatty acids or fructose esters of fatty acids.

5. A method according to any one of the preceding claims, wherein the hot airflow is generated with the aid of a blower.

6. A method according to claim 5, wherein air coming from downstream of said part of the airflow is guided back to the blower.

7. A drying apparatus for drying an outer surface of pieces of vegetables and/or fruit, in particular pomes, such as apples and/or pears, wherein the drying apparatus is provided with a blower for providing an airflow, a conveyor for conveying the pieces of vegetables and/or fruit through at least a part of an airflow in a conveying direction, wherein the flow direction of the airflow is substantially in one direction and is at least substantially directed the same as the conveying direction.

8. A drying apparatus according to claim 7, wherein the blower comprises a heating element for heating air, with the aid of which the blower operatively forms the airflow.

9. A drying apparatus according to claim 8, wherein the heating element is arranged for heating air to a temperature which is between 70°C and 80°C.

10. A drying apparatus according to any one of claims 7-9, wherein the drying apparatus is provided with a cap for guiding the airflow.

11. A drying apparatus according to claim 10, wherein the drying apparatus comprises a flow circuit for guiding air coming from downstream of said part of the airflow back to the blower.

12. A processing apparatus for applying a coating to pieces of vegetables and/or fruit, in particular pomes, such as apples and/or pears, wherein the processing apparatus is provided with a drying apparatus according to any one of claims 7-11, wherein the processing apparatus comprises a first moisturizer for applying a solution to an outer surface of the pieces of vegetables and/or fruit.

13. A processing apparatus according to claim 12, wherein the first moisturizer is designed as a pouring, spraying or immersion device.

14. A sorting apparatus for sorting pieces of vegetables and/or fruit, in particular pomes, such as apples and/or pears, which sorting apparatus is provided with a drying apparatus according to any one of claims 7-11 or with a processing apparatus according to claim 12 or 13, wherein the sorting apparatus is provided with a detector for determining a parameter of the separate pieces of vegetables and/or fruit and a separating portion for separating the pieces of vegetables and/or fruit on the basis of the quantity of the pieces of vegetables and/or fruit.

15. A sorting apparatus according to claim 14, wherein the detector is a photocell and the parameter is the size and/or the sugar content and/or the color and/or the hardness of the separate pieces of vegetables and/or fruit.

16. A sorting apparatus according to claim 14 or 15, wherein the detector is arranged for determining the quantity of pieces of vegetables and/or fruit present on the conveyor.

17. A sorting apparatus according to claim 16, wherein the sorting apparatus comprises a supply for feeding the pieces of vegetables and/or fruit from the conveyor to the separating portion.

18. A sorting apparatus according to claim 17, wherein the detector is arranged for determining the quantity of pieces of vegetables and/or fruit present on the supply.

19. A sorting apparatus according to any one of claims 14-18, wherein the sorting apparatus comprises a reconditioning device for revitalizing preserved pieces of vegetables and/or fruit, in particular pomes, such as apples and/or pears, wherein the reconditioning device comprises a second moisturizer for moistening the pieces of vegetables and/or fruit with a reconditioning fluid.

20. A sorting apparatus according to claim 19, wherein the reconditioning device is provided with a further drying apparatus for drying the pieces of vegetables and/or fruit moistened with reconditioning fluid.

21. Use of a drying apparatus according to any one of claims 7-11, a processing apparatus according to claim 12 or 13, a sorting apparatus according to any one of claims 14-20 for use of a method according to any one of claims 1-6.
